# EUROPEAN PATENT SPECIFICATION

(11) **EP 3 744 466 B1**
(45) Date of publication and mention of the grant of the patent: **22.11.2023**
(21) Application number: 18901019.2
(22) Date of filing: 22.01.2018
(51) Int. Cl.: B23K 13/06, B21C 37/08, B23K 13/00, B23K 11/00, B23K 11/087, B23K 13/02, B23K 101/06, B23K 103/04

(54) **ELECTRIC RESISTANCE WELDED STEEL PIPE MANUFACTURING DEVICE AND ELECTRIC RESISTANCE WELDED STEEL PIPE MANUFACTURING METHOD**
VORRICHTUNG ZUR HERSTELLUNG EINES WIDERSTANDSGESCHWEISSTEN STAHLROHRS UND VERFAHREN ZUR HERSTELLUNG EINES WIDERSTANDSGESCHWEISSTEN STAHLROHRS
DISPOSITIF DE FABRICATION DE TUYAU EN ACIER SOUDÉ PAR RÉSISTANCE ÉLECTRIQUE ET PROCÉDÉ DE FABRICATION DE TUYAU EN ACIER SOUDÉ PAR RÉSISTANCE ÉLECTRIQUE

(43) Date of publication of application: 02.12.2020
(73) Proprietor: NIPPON STEEL CORPORATION, Tokyo 100-8071 (JP)
(72) Inventor: WATANABE, Kotaro, Tokyo 100-8071 (JP); HAMATANI, Hideki, Tokyo 100-8071 (JP); WATANABE, Fuminori, Tokyo 100-8071 (JP); TANAKA, Kimiharu, Tokyo 100-8071 (JP); TAKEDA, Yusuke, Tokyo 100-8071 (JP); TOMONAGA, Yuya, Tokyo 100-8071 (JP); HASHIMOTO, Yoshihiro, Tokyo 100-8071 (JP); HAYASHI, Masahide, Tokyo 100-8071 (JP)
(74) Representative: Vossius & Partner Patentanwälte Rechtsanwälte mbB
(86) International application number: PCT/JP2018/001788
(87) International publication number: WO 2019/142359

(56) References cited:
- WO-A1-2008/108450
- WO-A1-2009/113720
- JP-A- H0 523 867
- JP-A- 2004 298 961
- JP-A- 2013 107 122
- JP-A- 2013 107 122
- JP-U- S5 650 579

## Description

### [Technical Field of the Invention]

The present invention relates to an electric resistance welded steel pipe manufacturing device and an electric resistance welded steel pipe manufacturing method.

### [Related Art]

In the manufacture of electric resistance welded steel pipes, generally, an electric resistance welded steel pipe is obtained by forming a strip-shaped steel sheet (hereinafter simply referred to as a "steel sheet") in a tubular shape by many groups of rolls while continuously conveying the same, melting abutment end surfaces of the steel sheet by induction heating using a work coil or direct energization heating using a contact tip, and forming a welding seam between the abutment end surfaces while pressing the steel sheet with squeeze rolls.

Since the abutment end surfaces are exposed to the ambient air during electric resistance welding, oxides are generated on the surface. In a case where the oxides remain, welding defects resulting from the oxides referred to as a penetrator may occur in the welded part. As suppressing the welding defects, the plasma shield electric resistance welding of supplying a plasma flow to the welded part during the electric resistance welding is known.

For example, Patent Document 1 discloses a method of suppressing the generation of oxides on abutment end surfaces and promoting the discharge of oxides by blowing a reducing high-temperature combustion flame of 1400°C or higher or a non-oxidizing high-temperature plasma flow against the abutment end surfaces at a predetermined flow velocity during the electric resistance welding of a steel pipe. Hereinafter, the technique of performing the electric resistance welding while supplying the plasma flow to the welded part is referred to as plasma shield electric resistance welding. The technical concept of the plasma shield electric resistance welding is basically different from that of the plasma welding of performing welding with plasma itself.

Patent Document 2, on which the preamble of the independent claims is based, discloses a method of stably reducing welding defects resulting from oxides by making a plasma jet into a laminar flow or a pseudo laminar flow.

In the plasma shield electric resistance welding which includes the process of heating and melting abutment end portions of the steel sheet, by supplying plasma gas to the welded part, the abutment end portions are maintained in a state where oxygen concentration is low due to a shielding action of the abutment end portions caused by an ionized plasma gas, a reduction action caused by the ionized plasma gas, or the like. As a result, the generation of an oxide film of the abutment end portions, which may be the oxide defects after welding, can be suppressed, and welding with few defects is allowed.

### [Prior Art Document]

### [Patent Document]

[Patent Document 1] Japanese Unexamined Patent Application, First Publication No. 2004-298961
[Patent Document 2] PCT International Publication No. WO2008/108450

### [Disclosure of the Invention]

### [Problems to be Solved by the Invention]

An electric resistance welding process is performed in a state where a plurality of peripheral devices, such as a number of rolls and a coil or a contact tip for generating an induced current around the weled part, are disposed around the welded part. In that case, as in the related art, in a case where the plasma flow is supplied from the outside of the steel sheet subjected to the electric resistance welding, there is a case where the plasma flow supply device cannot be appropriately installed due to interference with the above peripheral devices. Even if the plasma flow supply device can be installed, there is a case where the plasma flow cannot be supplied to the welded part at an ideal angle or at an ideal distance. Additionally, when being affected by the wind or airflow of outside air, there are cases where shielding due to the plasma flow is not appropriately performed, the amount of entrainment of oxygen increases, the oxide system defects of the welded part increases, and the state of the welded part deteriorates.

The invention has been made in view of the above circumstances, and an object thereof is to provide an electric resistance welded steel pipe manufacturing device and an electric resistance welded steel pipe manufacturing method that can improve the quality of a welded part to increase the reliability of an electric resistance welded steel pipe.

### [Means for Solving the Problems]

The present inventors have intensively studied a method of improving the quality of a welded part of an electric resistance welded steel pipe by supplying a plasma flow to the welded part in an ideal state. As a result, it has been found that the quality of the welded part can be improved by supplying the plasma flow to the welded part from the inside of the steel pipe subjected to electric resistance welding.

The present invention is defined in the claims. The invention has been made in view of the above circumstances and has adopted the following aspects.

(1) One aspect of the invention is an electric resistance welded steel pipe manufacturing device that is configured to perform welding while forming a strip-shaped steel sheet in a tubular shape and supplying a plasma flow to a pair of abutment end surfaces to perform shielding. The electric resistance welded steel pipe manufacturing device includes: a mandrel configured to be disposed within the steel sheet so as to be coaxial with a central axis when the steel sheet is formed in a tubular shape; and a plasma flow feeder that is provided in the mandrel to supply the plasma flow.
(2) In the electric resistance welded steel pipe manufacturing device according to the above (1), at least a portion of the plasma flow feeder may be accommodated within the mandrel.
(3) The electric resistance welded steel pipe manufacturing device according to the above (1) or (2) may further include a plasma flow interrupting plate that is configured to temporarily interrupt supply of the plasma flow.
(4) In the electric resistance welded steel pipe manufacturing device according to the above (3), at least a portion of the plasma flow interrupting plate may be accommodated within the mandrel.
(5) The electric resistance welded steel pipe manufacturing device according to the above (3) or (4) may further include a moving mechanism that is configured to move the plasma flow interrupting plate between a shielded position where the plasma flow flowing toward the pair of abutment end surfaces is interrupted, and a position other than the shielded position.
(6) The electric resistance welded steel pipe manufacturing device according to any one of the above (1) to (5) may further include a cover that covers at least a portion of the plasma flow feeder from above.
(7) The electric resistance welded steel pipe manufacturing device according to any one of the above (1) to (6) may further include a pair of squeeze top rolls that is configured to press the strip-shaped steel sheet so as to join the pair of abutment end surfaces together; and a protective wall that is configured to interrupt the plasma flow flowing toward the pair of squeeze top rolls from the plasma flow feeder
(8) The electric resistance welded steel pipe manufacturing device according to any one of the above (1) to (7) may further include an adjusting mechanism that adjusts a relative position or a relative angle or a combination thereof in the plasma flow feeder with respect to the mandrel.
(9) Another aspect of the invention is an electric resistance welded steel pipe manufacturing method that is configured to perform welding while forming a strip-shaped steel sheet in a tubular shape and supplying a plasma flow to a pair of abutment end surfaces to perform shielding. The method includes a step of supplying the plasma flow toward the pair of abutment end surfaces from an inside of the strip-shaped steel sheet that forms a tubular shape.
(10) The electric resistance welded steel pipe manufacturing method according to the above (9) may further include a step of temporarily interrupting the plasma flow flowing toward the pair of abutment end surfaces before a start of supply of the plasma flow.
(11) In the above electric resistance welded steel pipe manufacturing method according to (9) or (10), in a view where a centerline of the plasma flow is viewed from a side, an angle of the centerline with respect to a direction parallel to a feeding direction of the strip-shaped steel sheet may be 30° or less.

### [Effects of the Invention]

According to the above respective aspects of the invention, by providing the plasma flow feeder in the mandrel, the position of the plasma flow feeder can be disposed inside the steel sheet formed in a tubular shape. By disposing the plasma flow feeder within the steel pipe in this way, spatial restrictions due to interference with peripheral devices, such as a number of rolls and a coil or a contact tip, can be avoided. Hence, the plasma flow can be supplied at an ideal angle and at an ideal distance with respect to the pair of abutment end surfaces becoming the welded part. As a result, the vicinity of a V-shaped convergence point that is a welding point of the electric resistance welding can be reliably plasma-shielded, and the welding quality can be improved. Additionally, since the plasma flow feeder can be brought close to the pair of abutment end surfaces without causing interference with the above peripheral devices, the Reynolds number of the plasma flow blown from the plasma flow feeder at the pair of abutment end surface positions can be reduced. Hence, since the plasma flow can be maintained at a laminar flow at the position of the welded part, a reliable shielding effect with little entrainment of outside air can be exhibited. Hence, in addition to being not affected by the wind or airflow of outside air, the occurrence of oxide system defects of the welded part due to the entrainment of surrounding oxygen can be suppressed. Thus, the quality of the electric resistance welded steel pipe can be improved.

Additionally, since the plasma flow feeder, which emits operation sound, is disposed within the tubular steel sheet, it is also possible to secure work in an environment where noise is suppressed compared to the related art.

### [Brief Description of the Drawings]

FIG. 1 is a view showing the essential parts of an electric resistance welded steel pipe manufacturing device according to a first embodiment of the invention, FIG. 1(A) is a plan view, and FIG. 1(B) is a side view.
FIG. 2 is a view showing a plasma flow supply device of the electric resistance welded steel pipe manufacturing device and is an enlarged view of a portion A of FIG. 1(B).
FIG. 3 is a view showing the plasma flow supply device of the electric resistance welded steel pipe manufacturing device according to a second embodiment of the invention and is an enlarged side view equivalent to the portion A of FIG. 1(B).

### [Embodiments of the Invention]

Respective embodiments of an electric resistance welded steel pipe manufacturing device and an electric resistance welded steel pipe manufacturing method of the invention will be described below, referring to the drawings.

### [First Embodiment]

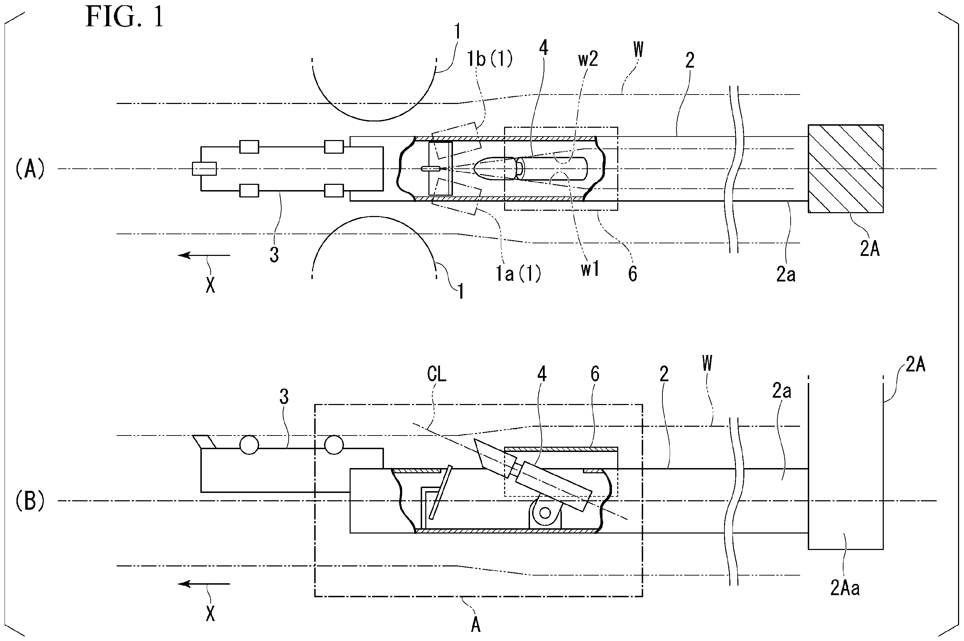

As shown in FIG. 1, the electric resistance welded steel pipe is a steel pipe that is continuously manufactured by forming a strip-shaped steel sheet W (hereinafter simply referred to as "a steel sheet W") in a tubular shape with a number of forming rolls 1 while feeding the steel sheet W in an X direction and welding a pair of abutment end surfaces w1 and w2 together.

More specifically, in a case where the electric resistance welded steel pipe is manufactured, first, the steel sheet W is formed in a tubular shape by a number of the forming rolls 1 while being continuously conveyed in a longitudinal direction. In that case, both the abutment end surfaces w1 and w2 are heated by applying an electric current from a workpiece coil (not shown) with the pair of abutment end surfaces w1 and w2 interposed therebetween, and a load is applied by the squeeze top rolls 1a and 1b among a number of the forming rolls 1 to weld both the abutment end surfaces w1 and w2 together by melting and crimping. The electric resistance welded steel pipe is continuously manufactured by the above steps. In addition, since the steel sheet W is not completed as a steel pipe in the state before welding even if the steel sheet is formed in a tubular shape, the steel sheet can also be referred to as an open pipe.

The electric resistance welded steel pipe manufacturing device of the present embodiment includes a number of the forming rolls 1, a mandrel 2, a bead cutting device 3, a plasma flow supply device 4, a plasma flow interrupting plate 5, a cover 6, and a protective wall 7. Also, when the pair of abutment end surfaces w1 and w2 is welded together, the plasma shielding of supplying a plasma flow PF generated by the plasma flow supply device 4 provided inside the steel sheet W formed in a tubular shape to the pair of abutment end surfaces w1 and w2 to cover the abutment end surfaces is performed.

The mandrel 2 is a columnar component that is disposed within the steel sheet W so as to be coaxial with a central axis when the steel sheet W is formed in a tubular shape, and has an upstream end 2a connected to and supported by a support member 2A. The support member 2A is a component that extends downward from above in the vertical direction and is disposed such that a lower end 2Aa thereof reaches the inside of the steel sheet W formed in a tubular shape. Then, by connecting the upstream end 2a of the mandrel 2 to the lower end 2Aa of the support member 2A, the mandrel 2 is supported so as to extend in the horizontal direction (X direction).

The bead cutting device 3 for removing beads generated on an inner surface of a welded part of the electric resistance welded steel pipe is fixed to a tip (a downstream end in the X direction) of the mandrel 2. Therefore, the bead cutting device 3 is supported on the support member 2A via the mandrel 2.

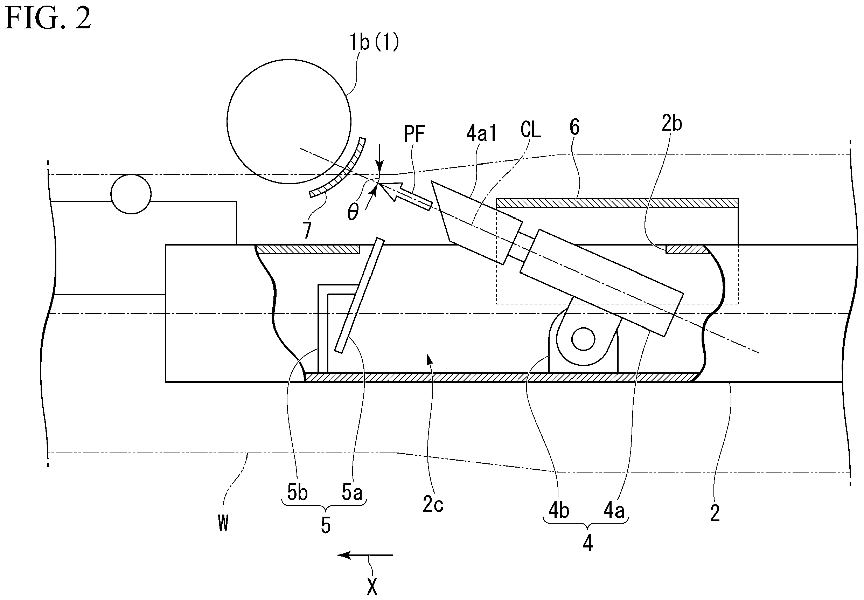

As shown in FIG. 2, an accommodation space 2c opening upward in the vertical direction via an opening 2b is formed at a position upstream of the bead cutting device 3 in a view where the mandrel 2 is viewed in the longitudinal direction. The plasma flow supply device 4 is accommodated within this accommodation space 2c. The accommodation space 2c has a sufficient size to adjust the positional adjustment and the inclination angle of the plasma flow supply device 4 disposed therein.

If an attempt to dispose the plasma flow supply device 4 within the tubular steel sheet W is simply made, the plasma flow supply device cannot be disposed due to interference with the mandrel 2. However, in the present embodiment, the plasma flow supply device 4 can be disposed by utilizing the presence of the mandrel 2 in reverse.

An impeder (not shown) can also be supported on the mandrel 2 in addition to the bead cutting device 3. In this case, it is possible to dispose the impeder by rolling or putting the impeder at a position close to the welded part in the longitudinal direction of the mandrel 2.

As shown in FIG. 2, the plasma flow supply device 4 includes a plasma flow feeder 4a that blows the plasma flow PF toward the abutment end surfaces w1 and w2 at a welding position, and a base 4b that is installed within the accommodation space 2c in a state where the base supports the plasma flow feeder 4a therebelow.

The plasma flow feeder 4a applies a voltage to a plasma working gas supplied between a cathode and an anode to generate the plasma flow PF. The cathode of the plasma flow feeder 4a is constituted of, a copper main body portion having, for example, a water-cooled structure, and a negative electrode made of a rod-shaped tungsten inserted into the main body portion. The cathode and the anode are electrically insulated from each other. A copper member having, for example, a water-cooled structure can be adopted for the anode.

In addition, the plasma flow feeder 4a of the present embodiment has a power consumption of about 40 kW, which is about 1/10 of the power consumption of a plasma welding device dedicated to welding.

The plasma working gas is not particularly limited. For example, although a mixed gas including H₂ gas, Ar gas, and N₂ gas is general, a mixed gas further including He gas can also be used. The characteristics of the respective gas components of H₂, N₂, and Ar are generally described as follows.

H₂ has a high heat transfer rate, and has an effect of improving the heat transfer rate of the entire gas. Additionally, H₂ has an oxygen killing action (an action of making the oxygen entrained from the ambient air inactive) when becoming the plasma flow PF, is coupled with the oxygen mixed into the plasma flow PF, and has an effect of inhibiting the generation of oxides. Since hydrogen has a reduction action, i.e. an oxidization inhibiting action, hydrogen has an effect of inhibiting the generation of oxides in conjunction with an oxygen killing action. However, hydrogen has an action of preventing plasma stability, and also has a drawback that stable plasma is not easily obtained.

Since N₂ is lighter in mass than Ar, the Reynolds number (Re) can be reduced. For this reason, N₂ has an effect of easily turning the plasma flow PF into a laminar flow. Additionally, the separated nitrogen has an oxygen killing action similarly to hydrogen and has an effect of fusing with oxygen in the plasma flow PF to inhibit the generation of oxides.

Ar has a plasma stabilizing effect. Ar is an element that easily turns into plasma, and if Ar is increased at the time of initial ignition or the like, stable plasma is obtained.

The length of the plasma flow PF to be generated and or plasma flow supply angle are not particularly limited. However, by increasing the length of the plasma flow PF, increasing the diameter of the plasma flow PF, and reducing an angle with respect to the welded part, it is possible to cover a wide range around the welded part with the plasma flow PF. Accordingly, since the length range of the abutment end surfaces w1 and w2 to be shielded are sufficiently secured, this is preferable in that the oxidization can be inhibited and the welding quality can be secured. Specifically, it is preferable that the length of the plasma flow is 100 to 500 mm, the diameter of the plasma is 10 to 35 mm, and the plasma flow supply angle θ (FIG. 2) is 30° or less and preferably 20° or less. Here, the plasma flow supply angle θ is an angle formed by a central axis CL of the plasma flow PF in a case where the conveyance direction (X direction) of the steel sheet W is viewed from the side.

Meanwhile, cooling water is supplied to cool the forming roll 1 that forms the steel sheet W in a tubular shape. In order to prevent the cooling water from directly reaching a vent port of the plasma flow feeder 4a, in the present embodiment, a tubular cover 4a 1 is provided at the tip of the plasma flow feeder 4a.

In the related art, there was no idea to dispose the plasma flow supply device 4, which is a precision instrument, within the steel pipe. In contrast, in the present embodiment, by adopting a configuration in which the plasma flow supply device 4 is installed within the steel pipe, it is possible to supply the plasma flow PF at an ideal angle without receiving spatial restrictions due to interference with peripheral devices, such as a number of rolls and a coil or a contact tip. As a result, reliable plasma shielding is implemented near a V-shaped convergence point that is a welding point of the steel sheet W, and the welding quality can be improved. Additionally, in order to blow the plasma flow PF from the inside of the pipe, the plasma flow PF is not affected by wind or airflow around the steel pipe. Hence, the occurrence of defects of an oxide system of the welded part due to oxygen entrainment can be suppressed, deterioration of a material can be suppressed, and the quality of the electric resistance welded steel pipe can be improved.

Additionally, by disposing the plasma flow supply device 4, which emits operation sound, within the pipe, it is possible to secure work in an environment where noise is suppressed compared to the related art.

Additionally, as described above, in the related art, in order to avoid interference with the peripheral devices in the perimeter of a steel pipe, it was necessary to separate the position of the plasma flow supply device 4 from the welded part to some extent. In contrast, in the present embodiment, the plasma flow supply device 4 is disposed within the steel pipe. Therefore, the above interference does not occur, and it is possible to bring the plasma flow supply device 4 close to the welded part. Hence, the plasma flow PF blown from the plasma flow supply device 4 can be simply maintained as a laminar flow at the position of the welded part. That is, as compared to the related-art structure in which the plasma flow is blown from a distant point, the Reynolds number at the welding position can be more simply reduced. Hence, since the plasma flow PF with little entrainment of outside air can be supplied to the abutment end surface w1 and w2, the reliable shielding effect can be exhibited, and the quality of the electric resistance welded steel pipe can be further improved.

The base 4b shown in FIG. 2 is adapted to be capable of adjusting the position of a blowing destination of the plasma flow PF, the angle of the plasma flow PF with respect to the blowing destination, the distance from the plasma flow feeder 4a to the blowing destination, and the like by performing the positional adjustment and the inclination angle adjustment of the plasma flow feeder 4a. More specifically, the base 4b includes a drive mechanism (not shown), such as a motor. Then, by operating the drive mechanism, the base 4b can be horizontally moved within the accommodation space 2c, moved up and down in the vertical direction within the accommodation space 2c, or tilted within the accommodation space 2c, and can perform these movements in combination. The operation of the drive mechanism is controlled according to an input signal from a control device that is not shown.

The cover 6 shown in FIGS. 1 and 2 is a component obtained by bending work of a rectangular metal plate in an arch shape at a central position thereof, and is supported on the mandrel 2 via a sliding mechanism that is not shown.

The cover 6 covers a body portion of the plasma flow feeder 4a also including a portion of the opening 2b of the mandrel 2 from thereabove. When viewed from above, the portion, which protrudes outward from the cover 6, is only the cover 4a1 portion of the plasma flow feeder 4a. Additionally, the cover 6 is formed to be larger than the external diameter of the mandrel 2 so as not to interfere with the plasma flow feeder 4a in consideration of the range of the above positional adjustment and the range of above angle adjustment in the plasma flow feeder 4a.

The cover 6 is slidingly movable in the X direction with respect to the mandrel 2 by the sliding mechanism. That is, the cover 6 is slidingly movable between a position where the cover 6 covers an upper side of the plasma flow feeder 4a and a position where the cover 6 slides to an upstream side in the X direction to fully open the opening 2b. During the normal operation of the plasma flow feeder 4a, the cover 6 is located at a position where the cover 6 covers the upper side of the plasma flow feeder 4a. The cover 6 when being located at this position prevents the cooling water from reaching the plasma flow feeder 4a. On the other hand, in a case where an access is made to maintain the plasma flow feeder 4a, the cover 6 is slid to fully open the opening 2b.

The sliding operation of the cover 6 may be manual or electric.

As shown in FIG. 2, the plasma flow interrupting plate 5 is disposed downstream of the plasma flow feeder 4a in the X direction within the accommodation space 2c of the mandrel 2. The plasma flow interrupting plate 5 includes a body 5a, and a supporting member 5b that supports the body 5a within the accommodation space 2c.

The body 5a has a rectangular plate shape and is inclined such that a surface facing the plasma flow feeder 4a faces downward when viewed from the side. Also, the supporting member 5b is fixed to a rear surface of the body 5a so as to support the body 5a in such an inclined state.

If the length of the plasma flow PF is increased, there is a case where substantial time is taken until the plasma flow PF is stabilized from the start of supply of the plasma flow PF. In this case, if an operator waits for the plasma flow PF to be stabilized in a state where the plasma flow PF is applied to the peripheral devices and the steel sheet W, there is a case where the peripheral devices or the steel sheet W may be damaged. For that reason, it is preferable that the position and angle of the plasma flow feeder 4a are adjusted to prevent the plasma flow PF reaching the peripheral devices or the steel sheet W until the plasma flow PF is stabilized.

However, since the inside of the steel sheet W is narrow, there is a case where the space for adjusting the position and the angle of the plasma flow feeder 4a cannot be secured. For that reason, in the present embodiment, the plasma flow interrupting plate 5, which temporarily interrupts the plasma flow PF, is installed in front of the plasma flow feeder 4a, and the plasma flow PF is applied to the plasma flow interrupting plate 5 until the plasma flow PF is stabilized. As the body 5a of the plasma flow interrupting plate 5, a water-cooled metal plate, such as a water-cooled copper plate, a ceramic having high heat-resisting properties, or the like can be used.

Since the body 5a is inclined downward, the plasma flow PF, which has reached the surface of the body 5a, will not again be returned toward the plasma flow feeder 4a.

As shown in FIG. 2, the protective wall 7 protects, from the plasma flow PF, the pair of squeeze top rolls 1a and 1b which presses the steel sheet W such that the pair of abutment end surfaces w1 and w2 are joined together. The protective wall 7 is interposed between the squeeze top rolls 1a and 1b and the plasma flow feeder 4a, and interrupts the plasma flow PF flowing toward the pair of squeeze top rolls 1a and 1b from the plasma flow feeder 4a. As the protective wall 7, a water-cooled metal plate, such as a water-cooled copper plate, a ceramic having high-hest resisting properties, or the like can be used.

The main points of the present embodiment described above are summarized below. The electric resistance welded steel pipe manufacturing device of the present embodiment performs welding while forming the steel sheet W in a tubular shape and supplying the plasma flow PF between the pair of abutment end surfaces w1 and w2 to perform shielding. The electric resistance welded steel pipe manufacturing device includes the mandrel 2, and the plasma flow feeder 4a that is provided in the mandrel 2 to supply the plasma flow PF.

Additionally, in the electric resistance welded steel pipe manufacturing device of the present embodiment, at least a portion of the plasma flow feeder 4a is accommodated within the mandrel 2. In addition, in the present embodiment, a case where the entire plasma flow feeder 4a is accommodated within the mandrel 2 has been exemplified. However, the invention is not limited only to this configuration. As long as the plasma flow feeder 4a is disposed in the inside of the steel sheet W formed in a tubular shape without interference, a portion of the plasma flow feeder 4a may be outside the mandrel 2 or the plasma flow feeder 4a may be completely outside the mandrel 2.

Additionally, the electric resistance welded steel pipe manufacturing device of the present embodiment further includes the plasma flow interrupting plate 5 that temporarily interrupts the supply of the plasma flow PF.

Additionally, in the electric resistance welded steel pipe manufacturing device of the present embodiment, at least a portion of the plasma flow interrupting plate 5 is accommodated within the mandrel 2. In the present embodiment, a case where the substantially entire plasma flow interrupting plate 5 is accommodated within the mandrel 2 has been exemplified. However, the invention is not limited to only this configuration, and a configuration in which the plasma flow interrupting plate 5 is partially outside the mandrel 2, and a configuration in which the entire plasma flow interrupting plate 5 is outside the mandrel 2 can also be adopted.

Additionally, the electric resistance welded steel pipe manufacturing device of the present embodiment further includes the cover 6 that covers at least a portion of the plasma flow feeder 4a from above. In addition, as long as the cooling water is prevented from reaching the plasma flow feeder 4a, a configuration in which the cover 6 covers only a portion of the plasma flow feeder 4a can also be adopted as the cover 6. However, a configuration in which the cover 6 covers the entire plasma flow feeder 4a as in the present embodiment is more preferable.

Additionally, the electric resistance welded steel pipe manufacturing device of the present embodiment further includes the pair of squeeze top rolls 1a and 1b for pressing the steel sheet W such that the pair of abutment end surfaces w1 and w2 are joined together, and the protective wall 7 that interrupts the plasma flow PF flowing toward the pair of squeeze top rolls 1a and 1b from the plasma flow feeder 4a.

Additionally, the electric resistance welded steel pipe manufacturing device of the present embodiment further includes the base (adjusting mechanism) 4b that adjusts the relative position or the relative angle or a combination thereof in the plasma flow feeder 4a with respect to the mandrel 2.

Moreover, the following electric resistance welded steel pipe manufacturing method is executed using the electric resistance welded steel pipe manufacturing device having the above configuration.

That is, the electric resistance welded steel pipe manufacturing method of the present embodiment performs welding while forming the steel sheet W in a tubular shape and supplying the plasma flow PF to the pair of abutment end surfaces w1 and w2 to perform shielding. Also, the method includes the step of supplying the plasma flow PF toward the pair of abutment end surfaces w1 and w2 from the inside of the steel sheet W that forms a tubular shape.

Additionally, the electric resistance welded steel pipe manufacturing method of the present embodiment further includes the step of temporarily interrupting the plasma flow PF flowing toward between the pair of abutment end surfaces w1 and w2 before the start of supply of the plasma flow PF.

Additionally, in the electric resistance welded steel pipe manufacturing method of the present embodiment, in a view where the centerline CL of the plasma flow PF is viewed from the side, the angle of the centerline CL formed with respect to a direction parallel to the feeding direction of the steel sheet W is set to 30° or less.

### [Second Embodiment]

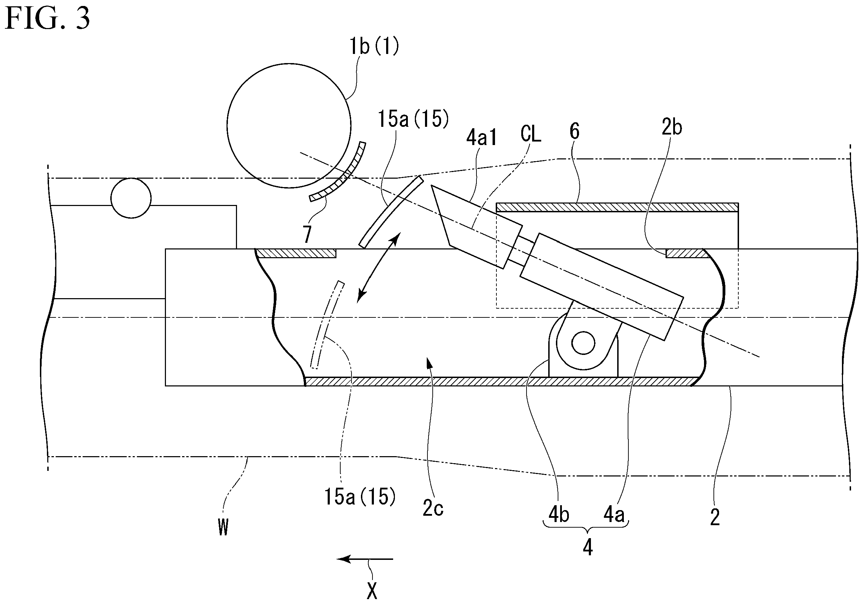

Subsequently, a second embodiment of the invention will be described below, referring to FIG. 3. In the respective views after FIG. 3 and the following description, the same constituent elements as those of the respective constituent elements described in the above first embodiment will be designated by the same reference signs, and the description thereof will be omitted. Hereinafter, differences from the above first embodiment will be mainly described.

The electric resistance welded steel pipe manufacturing device of the present embodiment is different from the configuration of the above first embodiment in that a movable plasma flow interrupting plate 15 shown in FIG. 3 is provided instead of the plasma flow interrupting plate 5.

The plasma flow interrupting plate 15 of the present embodiment is disposed downstream of the plasma flow feeder 4a in the X direction within the accommodation space 2c of the mandrel 2. The plasma flow interrupting plate 15 includes a body 15a, and a moving mechanism (not shown) that supports the body 15a so as to be movable upward and downward within the accommodation space 2c.

The body 15a is a plate material that is rectangular when viewed from the front and forms an arcuate shape when viewed from the side, and is inclined such that a concave surface that faces the plasma flow feeder 4a faces downward when viewed from the side. Also, the moving mechanism is fixed to a rear surface of the body 15a so as to support the body 15a in such an inclined state.

Also, the body 15a is moved between shielded position (upper position shown by a solid line) that interrupts the plasma flow PF flowing toward the pair of abutment end surfaces w1 and w2, and a position other than the shielded position (lower position shown by an imaginary line) by the moving mechanism.

In the above first embodiment, the plasma flow PF is applied to the body 5a by changing the inclination angle of the plasma flow feeder 4a until the plasma flow PF is stabilized from the start of supply of the plasma flow PF, and this prevents the damage to the peripheral devices, the steel sheet W, or the like.

On the other hand, in the present embodiment, by directing the welded part such that the inclination angle of the plasma flow feeder 4a is constant and moving the body 15a upward by the moving mechanism, the plasma flow PF at the time of the start of supply is prevented from reaching the peripheral devices, the steel sheet W, or the like. Then, after the plasma flow PF is stabilized, the supply of the plasma flow PF to the welded part is permitted by moving the body 15a downward by the moving mechanism.

In addition, as the body 15a, similarly to the body 5a, a water-cooled metal plate, such as a water-cooled copper plate, a ceramic having high heat-resisting properties, or the like can be used.

Although the respective embodiments of the invention have been described above, these embodiments are merely illustrative examples and are not intended to limit the scope of the invention. These embodiments can be carried out in other various forms, and various omissions, substitutions, and alternations can be performed without departing from the scope of the invention as defined in the claims. These embodiments and their modifications are embraced in the scope of the invention as defined in the claims, simultaneously with being embraced in the scope of the invention.

In addition, in the above embodiment, a configuration in which the plasma flow PF is supplied only from the inside of the steel sheet W to the welded part has been described. However, as needed, a configuration in which the plasma flow PF is blown from the outside of the steel sheet W to the welded part in addition to the plasma flow PF supplied from the inside of the steel sheet W may be adopted.

### [Industrial Applicability]

According to the invention, by supplying the plasma flow to the welded part at an ideal angle and at an ideal distance and reliably implementing the plasma shielding near the V-shaped convergence point that is the welding point of the electric resistance welding, the welding quality of the electric resistance welded steel pipe can be improved, and the quality of the electric resistance welded steel pipe can be improved. Thus, the industrial applicability is high.

### [Brief Description of the Reference Symbols]

1a, 1b: squeeze top roll
2: mandrel
4a: plasma flow feeder
4b: base (adjusting mechanism)
5, 15: plasma flow interrupting plate
6: cover
7: protective wall
PF: plasma flow
W: steel sheet (strip-shaped steel sheet)
w1, w2: abutment end surface

## Claims

1. An electric resistance welded steel pipe manufacturing device that is configured to perform welding while forming a strip-shaped steel sheet (W) in a tubular shape and supplying a plasma flow (PF) to a pair of abutment end surfaces (w1, w2) to perform shielding, the electric resistance welded steel pipe manufacturing device **characterized by** comprising:
a mandrel (2) configured to be disposed within the steel sheet (W) so as to be coaxial with a central axis when the steel sheet (W) is formed in a tubular shape; and
a plasma flow feeder (4a) that is provided in the mandrel (2) to supply the plasma flow (PF).

2. The electric resistance welded steel pipe manufacturing device according to claim 1,
wherein at least a portion of the plasma flow feeder (4a) is accommodated within the mandrel (2).

3. The electric resistance welded steel pipe manufacturing device according to claim 1 or 2, further comprising:
a plasma flow interrupting plate (5, 15) that is configured to temporarily interrupt supply of the plasma flow (PF).

4. The electric resistance welded steel pipe manufacturing device according to claim 3,
wherein at least a portion of the plasma flow interrupting plate (5, 15) is accommodated within the mandrel (2).

5. The electric resistance welded steel pipe manufacturing device according to claim 3 or 4, further comprising:
a moving mechanism that is configured to move the plasma flow interrupting plate (15) between a shielded position where the plasma flow (PF) flowing toward the pair of abutment end surfaces (w1, w2) is interrupted, and a position other than the shielded position.

6. The electric resistance welded steel pipe manufacturing device according to any one of claims 1 to 5, further comprising:
a cover (6) that covers at least a portion of the plasma flow feeder (4a) from above.

7. The electric resistance welded steel pipe manufacturing device according to any one of claims 1 to 6, further comprising:
a pair of squeeze top rolls (1a, 1b) that is configured to press the strip-shaped steel sheet (W) so as to join the pair of abutment end surfaces (w1, w2) together; and
a protective wall (7) that is configured to interrupt the plasma flow (PF) flowing toward the pair of squeeze top rolls (1a, 1b) from the plasma flow feeder (4a).

8. The electric resistance welded steel pipe manufacturing device according to any one of claims 1 to 7, further comprising:
an adjusting mechanism (4b) that adjusts a relative position or a relative angle or a combination thereof in the plasma flow feeder (4a) with respect to the mandrel (2).

9. An electric resistance welded steel pipe manufacturing method that is configured to perform welding while forming a strip-shaped steel sheet (W) in a tubular shape and supplying a plasma flow (PF) to a pair of abutment end surfaces (w1, w2) to perform shielding, the electric resistance welded steel pipe manufacturing method **characterized by** comprising:
a step of supplying the plasma flow (PF) toward the pair of abutment end surfaces (w1, w2) from an inside of the strip-shaped steel sheet (W) that forms a tubular shape.

10. The electric resistance welded steel pipe manufacturing method according to claim 9, further comprising:
a step of temporarily interrupting the plasma flow (PF) flowing toward the pair of abutment end surfaces (w1, w2) before a start of supply of the plasma flow (PF).

11. The electric resistance welded steel pipe manufacturing method according to claim 9 or 10,
wherein in a view where a centerline of the plasma flow (PF) is viewed from a side, an angle of the centerline with respect to a direction parallel to a feeding direction of the strip-shaped steel sheet (W) is 30° or less.

## Patentansprüche

1. Vorrichtung zur Herstellung eines widerstandsgeschweißten Stahlrohrs, die konfiguriert ist, Schweißen durchzuführen, während ein bandförmiges Stahlblech (W) in eine Röhrenform geformt wird und ein Plasmastrom (PF) einem Paar Stoßendflächen (w1, w2) zugeführt wird, um Abschirmung durchzuführen, wobei die Vorrichtung zur Herstellung eines widerstandsgeschweißten Stahlrohrs **dadurch gekennzeichnet ist, dass** sie aufweist:
einen Dorn (2), der konfiguriert ist, innerhalb des Stahlblechs (W) angeordnet zu werden, um mit einer zentralen Achse koaxial zu sein, wenn das Stahlblech (W) in eine Röhrenform geformt wird; und
eine Plasmastromzuführung (4a), die in dem Dorn (2) bereitgestellt ist, um den Plasmastrom (PF) zuzuführen.

2. Vorrichtung zur Herstellung eines widerstandsgeschweißten Stahlrohrs nach Anspruch 1, wobei mindestens ein Teil der Plasmastromzuführung (4a) innerhalb des Dorns (2) untergebracht ist.

3. Vorrichtung zur Herstellung eines widerstandsgeschweißten Stahlrohrs nach Anspruch 1 oder 2, ferner aufweisend:
eine Plasmastromunterbrechungsplatte (5, 15), die konfiguriert ist, die Zufuhr des Plasmastroms (PF) temporär zu unterbrechen.

4. Vorrichtung zur Herstellung eines widerstandsgeschweißten Stahlrohrs nach Anspruch 3, wobei mindestens ein Teil der Plasmastromunterbrechungsplatte (5, 15) innerhalb des Dorns (2) untergebracht ist.

5. Vorrichtung zur Herstellung eines widerstandsgeschweißten Stahlrohrs nach Anspruch 3 oder 4, ferner aufweisend:
einen Bewegungsmechanismus, der konfiguriert ist, die Plasmastromunterbrechungsplatte (15) zwischen einer abgeschirmten Position, in der der zu dem Paar Stoßendflächen (w1, w2) hinströmende Plasmastrom (PF) unterbrochen ist, und einer Position, die sich von der abgeschirmten Position unterscheidet, zu bewegen.

6. Vorrichtung zur Herstellung eines widerstandsgeschweißten Stahlrohrs nach einem der Ansprüche 1 bis 5, ferner aufweisend:
eine Abdeckung (6), die mindestens einen Teil der Plasmastromzuführung (4a) von oben bedeckt.

7. Vorrichtung zur Herstellung eines widerstandsgeschweißten Stahlrohrs nach einem der Ansprüche 1 bis 6, ferner aufweisend:
zwei obere Quetschwalzen (1a, 2a), die konfiguriert sind, das bandförmige Stahlblech (W) zu pressen, um so die zwei Stoßendflächen (w1, w2) miteinander zu verbinden; und
eine Schutzwand (7), die konfiguriert ist, den Plasmastrom (PF), der aus der Plasmastromzuführung (4a) zu den zwei oberen Quetschwalzen (1a, 1b) hinströmt, zu unterbrechen.

8. Vorrichtung zur Herstellung eines widerstandsgeschweißten Stahlrohrs nach einem der Ansprüche 1 bis 7, ferner aufweisend:
einen Anpassungsmechanismus (4b), der eine relative Position oder einen relativen Winkel oder eine Kombination davon in der Plasmastromzuführung (4a) bezüglich des Dorns (2) anpasst.

9. Verfahren zur Herstellung eines widerstandsgeschweißten Stahlrohrs, das konfiguriert ist, Schweißen durchzuführen, während ein bandförmiges Stahlblech (W) in eine Röhrenform geformt wird und ein Plasmastrom (PF) einem Paar Stoßendflächen (w1, w2) zugeführt wird, um Abschirmung durchzuführen, wobei das Verfahren zur Herstellung eines widerstandsgeschweißten Stahlrohrs **dadurch gekennzeichnet ist, dass** es aufweist:
einen Schritt eines Zuführens des Plasmastroms (PF) aus einem Inneren des bandförmigen Stahlrohrs (W), das eine Röhrenform bildet, hin zu dem Paar Stoßendflächen (w1, w2).

10. Verfahren zur Herstellung eines widerstandsgeschweißten Stahlrohrs nach Anspruch 9, ferner aufweisend:
einen Schritt eines temporären Unterbrechens des zu dem Paar Stoßendflächen (w1, w2) hinströmenden Plasmastroms (PF) vor einem Zuführungsstart des Plasmastroms (PF).

11. Verfahren zur Herstellung eines widerstandsgeschweißten Stahlrohrs nach Anspruch 9 oder 10,
wobei in einer Ansicht, in der eine Mittellinie des Plasmastroms (PF) von einer Seite gesehen wird, ein Winkel der Mittellinie bezüglich einer Richtung, die parallel zu einer Beschickungsrichtung des bandförmigen Stahlblechs (W) ist, 30° oder weniger ist.

## Revendications

1. Dispositif de fabrication de tuyau en acier soudé par résistance électrique qui est configuré pour réaliser une soudure tout en formant une tôle d'acier en forme de bande (W) en une forme tubulaire et en introduisant un écoulement plasma (PF) dans une paire de surfaces d'extrémité de butée (w1, w2) pour réaliser un blindage, le dispositif de fabrication de tuyau en acier soudé par résistance électrique **caractérisé en ce qu'**il comprend :
un mandrin (2) configuré pour être disposé à l'intérieur de la tôle d'acier (W) afin d'être coaxial avec un axe central lorsque la tôle d'acier (W) est formée en une forme tubulaire ; et
un dispositif d'introduction d'écoulement plasma (4a) qui est fourni dans le mandrin (2) pour introduire l'écoulement plasma (PF).

2. Dispositif de fabrication de tuyau en acier soudé par résistance électrique selon la revendication 1,
dans lequel au moins une portion du dispositif d'introduction d'écoulement plasma (4a) est logée à l'intérieur du mandrin (2).

3. Dispositif de fabrication de tuyau en acier soudé par résistance électrique selon la revendication 1 ou 2, comprenant de plus :
une plaque d'interruption d'écoulement plasma (5, 15) qui est configurée pour interrompre temporairement l'introduction de l'écoulement plasma (PF).

4. Dispositif de fabrication de tuyau en acier soudé par résistance électrique selon la revendication 3,
dans lequel au moins une portion de la plaque d'interruption d'écoulement plasma (5, 15) est logée à l'intérieur du mandrin (2).

5. Dispositif de fabrication de tuyau en acier soudé par résistance électrique selon la revendication 3 ou 4, comprenant de plus :
un mécanisme de déplacement qui est configuré pour déplacer la plaque d'interruption d'écoulement plasma (15) entre une position blindée où l'écoulement plasma (PF) s'écoulant vers la paire des surfaces d'extrémité de butée (w1, w2) est interrompu, et une position différente de la position blindée.

6. Dispositif de fabrication de tuyau en acier soudé par résistance électrique selon l'une quelconque des revendications 1 à 5, comprenant de plus :
une couverture (6) qui recouvre au moins une portion du dispositif d'introduction d'écoulement plasma (4a) à partir du dessus.

7. Dispositif de fabrication de tuyau en acier soudé par résistance électrique selon quelconque des revendications 1 à 6, comprenant de plus :
une paire de rouleaux supérieurs à pincement (1a, 1b) qui est configurée pour presser la tôle d'acier en forme de bande (W) afin de joindre la paire des surfaces d'extrémité de butée (w1, w2) ensemble ; et
une paroi protectrice (7) qui est configurée pour interrompre l'écoulement de plasma (PF) s'écoulant vers la paire de rouleaux supérieurs à pincement (1a, 1b) à partir du dispositif d'introduction d'écoulement plasma (4a).

8. Dispositif de fabrication de tuyau en acier soudé par résistance électrique selon l'une quelconque des revendications 1 à 7, comprenant de plus :
un mécanisme d'ajustement (4b) qui ajuste une position relative ou un angle relatif ou une combinaison de ceux-ci dans le dispositif d'introduction d'écoulement plasma (4a) par rapport au mandrin (2).

9. Procédé de fabrication de tuyau d'acier soudé par résistance électrique qui est configuré pour réaliser une soudure tout en formant une tôle d'acier en forme de bande (W) en une forme tubulaire et en introduisant un écoulement plasma (PF) dans une paire de surfaces d'extrémité de butée (w1, w2) pour réaliser un blindage, le procédé de fabrication de tuyau d'acier soudé par résistance électrique **caractérisé en ce qu'**il comprend :
une étape d'introduction de l'écoulement plasma (PF) vers la paire de surfaces d'extrémité de butée (w1, w2) à partir d'un intérieur de la tôle d'acier en forme de bande (W) qui forme une forme tubulaire.

10. Procédé de fabrication de tuyau d'acier soudé par résistance électrique selon la revendication 9, comprenant de plus :
une étape d'interruption temporaire de l'écoulement plasma (PF) s'écoulant vers la paire de surfaces d'extrémité de butée (w1, w2) avant un début d'introduction de l'écoulement plasma (PF).

11. Procédé de fabrication de tuyau d'acier soudé par résistance électrique selon la revendication 9 ou 10,
dans lequel dans une vue où une ligne centrale de l'écoulement plasma (PF) est vue de côté, un angle de la ligne centrale par rapport à une direction parallèle à une direction d'introduction de la tôle d'acier en forme de bande (W) est de 30° ou inférieur.
